# EUROPÄISCHE PATENTANMELDUNG

(11) **EP 0 601 976 A1**
(43) Veröffentlichungstag der Anmeldung: **15.06.1994**
(21) Anmeldenummer: 93810828.9
(22) Anmeldetag: 26.11.1993
(51) Int. Cl.: G02B 6/38

(54) **Stecker für einen Lichtwellenleiter**

(30) Priorität: 08.12.1992 CH 3757/92
(71) Anmelder: DIAMOND S.A., CH-6616 Losone-Locarno (CH)
(72) Erfinder: De Marchi, Silverio, CH-6646 Contra (CH)
(74) Vertreter: Wenger, René

(57) **Zusammenfassung**

Ein axial federnder Steckerstift (4) wird durch ein Sicherungselement in der Form einer U-förmigen Gabel (5) in seinem Federweg begrenzt und in der Drehlage fixiert. Zu diesem Zweck greift die Gabel (5) mit Spiel in Aussparungen (6, 6') am Steckerstift. Der Steckerstift kann dabei nach wie vor eine spielbedingte Drehbewegung um einen bestimmten Winkel (β) ausführen. Zur stets gleichen Positionierung des Steckerstifts in der Ruhelage ist wenigstens eine Auflaufflanke (7) vorgesehen, welche relativ zu einer durch die Mittelachse (8) des Steckerstifts verlaufenden Ebene geneigt ist und welche unter der Einwirkung einer Druckfeder gegen eine Auflaufkante (10) pressbar ist, die an der Gabel (5) angeordnet ist. Auf diese Weise kehrt der Steckerstift stets in die gleiche Drehlage zurück.

## Beschreibung

Die Erfindung betrifft einen Stecker für einen Lichtwellenleiter gemäss dem Oberbegriff von Anspruch 1. Axial federnde Steckerstifte sind seit langem bekannt und gebräuchlich. Damit soll erreicht werden, dass die Stirnseiten einander gegenüberliegender Steckerstifte gegeneinander gepresst werden, um allfällige Masstoleranzen auszugleichen und um eine optimale Übertragung zu gewährleisten.

Durch die DE-U-89 08 517.5 ist bereits ein gattungsmässig vergleichbarer Stecker bekannt geworden, bei dem das Sicherungselement eine U-förmige Gabel ist, die in parallele Aussparungen am Steckerstift eingreift. Die Gabel ist fest am Steckerkörper gehalten und sie begrenzt den axialen Federweg des Steckerstifts. Anderseits verhindert sie aber auch, dass sich der Steckerstift relativ zum Steckerkörper verdrehen kann. Damit der Steckerstift jedoch in seiner axialen Bewegungsfähigkeit nicht behindert wird, muss die Gabel mit einem ausreichenden Spiel in die Aussparungen eingreifen. Es hat sich nun gezeigt, dass selbst dieses geringe Spiel dazu führt, dass der Steckerstift eine geringfügige Drehbewegung ausführen kann. Dies wiederum hat zur Folge, dass der Stekkerstift nach jedem Steckvorgang theoretisch eine andere Drehlage einnehmen kann, was bei der unvermeidlichen Exzentrizität des Lichtwellenleiters zu ständig wechselnden Dämpfungswerten der Steckverbindung führen könnte. Besonders gravierend wirkt sich ein Lagefehler bei Steckverbindungen mit Dämpfungsfunktion und/oder mit hoher Rückflussdämpfung aus. Bei diesen Steckverbindungen ist die Stirnseite des Steckerstifts bzw. des Lichtwellenleiters angeschrägt, wobei sich die Endflächen gegenüberliegender Lichtwellenleiter nicht notwendigerweise berühren. Ein Beispiel für eine derartige Steckverbindung ist die EP-A-421 926 oder die (CH 3401/92).

Bei hochpräzisen Steckverbindungen für Lichtwellenleiter werden jedoch nicht nur kleine Dämpfungswerte angestrebt, sondern es soll auch ein hoher Grad der Reproduzierbarkeit dieser Werte erreicht werden. Es ist daher eine Aufgabe der Erfindung, einen Stecker der eingangs genannten Art zu schaffen, bei dem, trotz des zwangsläufig erforderlichen Spiels zwischen Sicherungselement und Aussparung, der Steckerstift bezüglich seiner Drehlage stets gleich positioniert wird. Diese Aufgabe wird erfindungsgemäss mit einem Stecker gelöst, der die Merkmale im Anspruch 1 aufweist. Es hat sich überraschend gezeigt, dass selbst ein reichlich bemessenes Spiel zwischen Sicherungselement und Aussparung ohne negative Auswirkungen verbleibt, wenn der Steckerstift und damit der darin gehaltene Lichtwellenleiter stets die gleiche Ausgangsposition vor dem Steckvorgang einnimmt. Eine derartige definierte Ausgangsposition ist durch das Anpressen der schrägen Auflaufflanke gegen die etwa parallele Auflaufkante stets gewährleistet. Hat sich der Steckerstift beim Lösen der Steckverbindung leicht verdreht und steht damit die Auflaufkante nicht mehr exakt parallel zur Auflaufflanke, so bewirkt letztere ein Verdrehen des Steckerstifts in die korrekte Lage, sobald sie unter der Federvorspannung gegen die Auflaufkante gepresst wird. Die erfindungsgemässe Stifthalterung eignet sich ganz besonders für Steckerstifte mit angeschrägter Stirnseite bei sogenannten "high return loss" Steckern oder bei Dämpfungsgliedern mit einstellbarer Übertragungsdämpfung.

Grundsätzlich spielt es keine Rolle, ob die Auflaufflanke an dem relativ zum Sicherungselement verschiebbaren Steckerstift oder an dem relativ zum Steckerkörper festen Sicherungselement angeordnet ist. In beiden Fällen kann beim Gegeneinanderpressen von Auflaufflanke und Auflaufkante eine Positionierung des Steckerstifts erreicht werden. Als besonders vorteilhaft hat es sich jedoch erwiesen, wenn die Auflaufflanke am Steckerstift angeordnet ist und wenn die Auflaufkante durch das Sicherungselement gebildet wird. Dies ist besonders dann der Fall, wenn das Sicherungselement eine U-förmige Gabel ist, die mit Spiel in einander diametral gegenüberliegende, segmentförmige Aussparungen mit parallelen Grundflächen eingreift. Die den Auflaufflanken zugewandten Gabelseiten bilden dabei unmittelbar die Auflaufkanten. Selbstverständlich müsste das Sicherungselement nicht unbedingt als Gabel ausgebildet sein. Auch andere Elemente, wie z.B. Stifte, Ringe usw. wären denkbar.

Die Auflaufflanke ist unter einem Winkel von mehr als 20° und weniger als 70°, vorzugsweise von etwa 45° geneigt. Die Neigung muss ersichtlicherweise gross genug sein, um ein Verkanten oder gar eine Keilhemmung zu vermeiden. Anderseits darf die Neigung nicht zu gross sein, damit die erwünschte Positionierwirkung eintritt.

Weitere Einzelmerkmale und Vorteile der Erfindung ergeben sich aus der nachfolgenden Beschreibung eines Ausführungsbeispiels und aus den Zeichnungen. Es zeigen:
- Figur 1: eine schematische Darstellung eines Steckerstifts mit einem gabelförmigen Sicherungselement,
- Figur 2: eine Ansicht einer U-förmigen Gabel,
- Figur 3: einen Querschnitt durch einen Steckerstift mit zwei Aussparungen, und
- Figur 4: einen Querschnitt durch einen zusammengebauten Stekker mit Gabel und Steckerstift gemäss den Figuren 2 und 3.

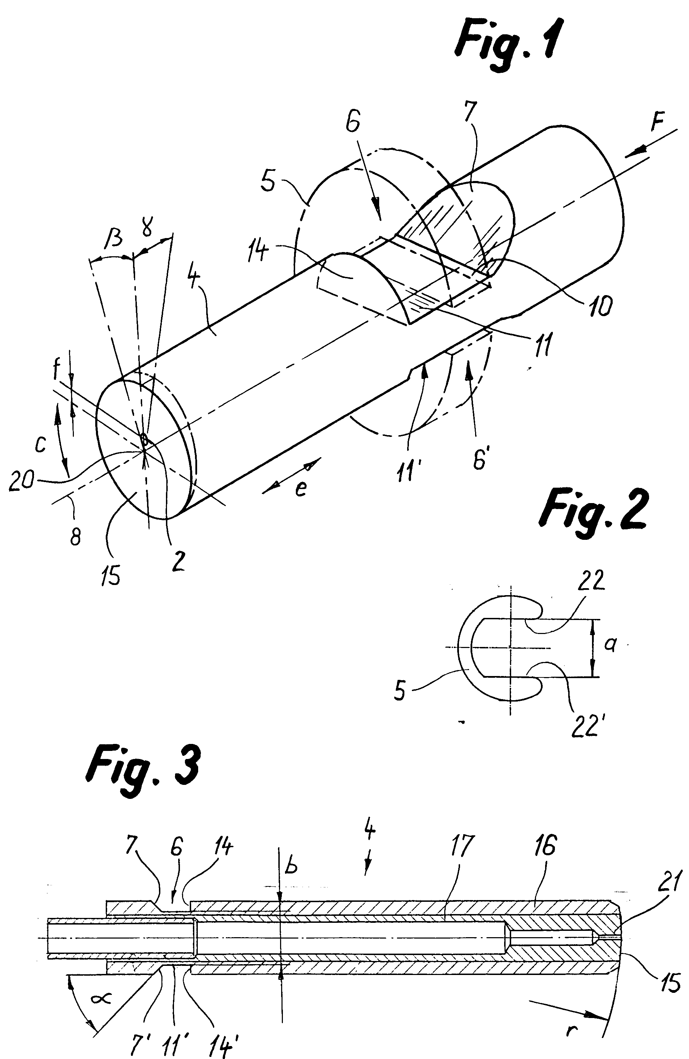

In Figur 1 ist zur Erläuterung des Funktionsprinzips ein stark vereinfachter, zylindrischer Steckerstift 4 dargestellt. Der Steckerstift hat eine geometrische Mittelachse 8, auf der theoretisch ein Lichtwellenleiter 2 in der Form einer Glasfaser gehalten ist. Tatsächlich wird jedoch diese Glasfaser nur in wenigen Fällen exakt konzentrisch auf der Mittelachse 8 liegen. In den meisten Fällen wird sich aufgrund von Toleranzschwankungen usw. eine Exzentrizität f einstellen.

Der Steckerstift 4 hat zwei einander, bezogen auf die Mittelachse 8, diametral gegenüberliegende Aussparungen 6 und 6'. Diese Aussparungen haben parallele Grundflächen 11 und 11'. Diese Grundflächen wiederum stehen parallel zu einer durch die Mittelachse 8 verlaufenden Ebene. Jede Aussparung hat eine Auflaufflanke 7 bzw. 7', welche unter einem bestimmten Winkel zur dazugehörigen Grundfläche und damit zu der durch die Mittelachse 8 verlaufenden Ebene geneigt ist. Die Auflaufflanken sind vorzugsweise plan ausgebildet. In bestimmten Fällen wäre aber auch eine leichte konkave oder konvexe Krümmung denkbar.

Gegen die Stirnseite 15 des Steckerstifts hin ist jede Aussparung 6, 6' mit einer Anschlagflanke 14 abgeschlossen, welche im rechten Winkel zur Grundfläche 11 angeordnet ist. Jede Aussparung bildet somit zusammen mit dem Sicherungselement einen vorderen und einen hinteren Anschlag für den in Pfeilrichtung e axial verschiebbaren Steckerstift.

Die Stirnseite 15 kann, wie angedeutet, unter einem Winkel γ angeschrägt sein, um eine hohe Rückflussdämpfung zu erzielen.

Die als Sicherungselement dienende U-förmige Gabel 5 übergreift mit ihren parallelen Gabelflanken 22, 22' (Fig. 2) die Aussparungen 6, 6'. Die Gabel 5 ist relativ zum Steckerstift 4 unbeweglich gehalten. Zwischen den Gabelflanken 22, 22' und den Grundflächen 11, 11' besteht ein geringfügiges Spiel, so dass sich der Steckerstift 4 in Pfeilrichtung c um den Winkel β verdrehen kann. Beim Vorhandensein einer Exzentrizität f dreht sich dabei ersichtlicherweise auch der Lichtwellenleiter 2 um den gleichen Winkel um die Mittelachse 8. Bei einer angeschrägten Stirnseite 15 ist ggf. der Abstand der optischen Flächen und damit die Dämpfung unmittelbar eine Funktion des Drehwinkels, so dass sich eine Abweichung sehr nachteilig auswirkt.

Eine Verdrehung des Steckerstifts in Pfeilrichtung c ist jedoch nur möglich, solange die Auflageflanke 7 nicht gegen die Auflaufkante 10 gepresst wird, welche an jeder Gabelflanke vorhanden ist. Über eine Druckfeder wird eine Kraft F auf den Steckerstift 4 ausgeübt, so dass im ausgesteckten Zustand der Steckerstift stets am hinteren Anschlag und damit an der Auflaufflanke 7 ansteht. Eine allfällige Verdrehung des Steckerstifts wird dabei stets wieder korrigiert, da sich die Auflaufflanke unter der Kraft F stets parallel zur Auflaufkante 10 einstellt.

Die Figuren 2 und 3 zeigen konkrete Ausführungsbeispiele einer Gabel 5 bzw. eines Steckerstifts 4. Der Steckerstift ist in an sich bekannter Weise zweiteilig aufgebaut und hat eine Aussenhülse 16 aus sehr hartem Material, beispielsweise aus Hartmetall oder aus Keramik. In dieser Aussenhülse sind die Aussparungen 6 und 6' angeordnet. Innerhalb der Aussenhülse 16 ist konzentrisch eine Innenhülse 17 aus einem relativ weichen Werkstoff, beispielsweise aus einer Neusilberlegierung, gehalten. Diese Innenhülse 17 hat eine Stufenbohrung 21, welche den Lichtwellenleiter aufnimmt. Die Gabel 5 ist ebenfalls aus einem harten und abriebfesten Werkstoff, beispielsweise aus einem Chromnickelstahl, gefertigt.

Die Darstellungen in den Figuren 2 und 3 sind stark vergrössert. In Wirklichkeit beträgt der Durchmesser des Steckerstifts 4 ca. 2,5 mm. Das Mass a zwischen den Gabelflanken 22, 22' hat gegenüber dem Mass b zwischen den Grundflächen 11, 11' ein geringfügiges Übermass. Die Stirnseite 15 des Steckerstifts kann unter einem Radius r kugelförmig abgerundet sein. Alternativ wäre auch eine Anschrägung denkbar, um damit eine hohe Rückflussdämpfung zu erzielen. Gerade bei Steckern mit erhöhter Rückflussdämpfung ist eine stets gleich Positionierung des Steckerstifts sehr wichtig. Die Auflaufflanken sind unter einem Winkel α von 45° geneigt.

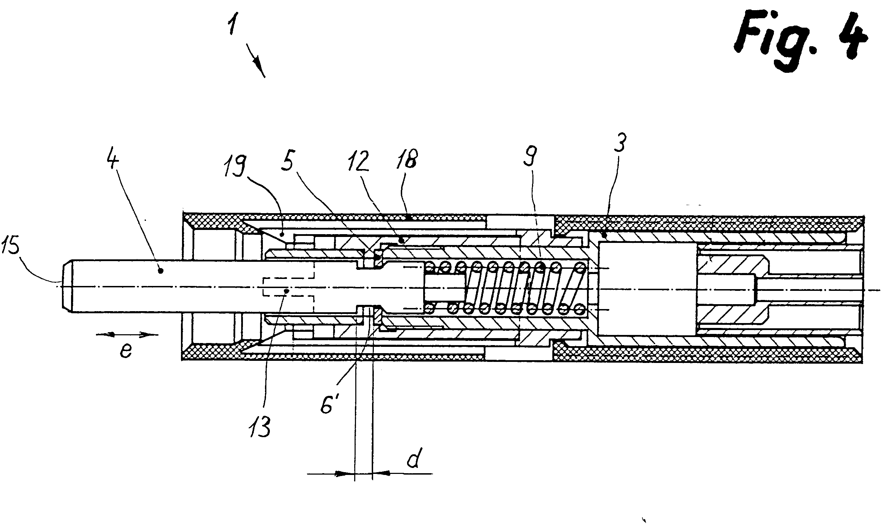

In Figur 4 ist ein Stecker 1 dargestellt, bei dem aus Gründen der besseren Übersichtlichkeit das Lichtwellenleiterkabel mit dem Lichtwellenleiter weggelassen wurde. Der Stecker besteht im wesentlichen aus einem Steckerkörper 3, der gleichzeitig das Gehäuse für eine Druckfeder 9 bildet. Der Steckerstift 4 ist in einer Zentrierhülse 12 geführt, die Bestandteil des Steckerkörpers ist und die entweder geklebt oder aufgeschraubt wird. Die Zentrierhülse begrenzt die mögliche Taumelbewegung des Steckerstifts. Auf der Aussenseite der Zentrierhülse 12 sitzt eine Positioniernase 13, die zum Positionieren des Steckerkörpers 3 in eine entsprechende Aussparung an einer hier nicht dargestellten Buchse eingreift.

Die Gabel 5 wird zusammen mit der Zentrierhülse 12 am Stekkerkörper 3 fixiert. Der verbleibende Freiraum in den Aussparungen entspricht dabei dem Federweg d, um den sich der Steckerstift 4 in Pfeilrichtung e verschieben kann. Im Ruhezustand werden die Auflaufflanken unter Einwirkung der Druckfeder jedoch stets gegen die Gabel 5 gepresst.

Am Steckerkörper 3 sind auch noch Rastzungen 19 befestigt, welche in der Buchse einrasten und den Stecker fixieren. Es handelt sich dabei um einen sogenannten Push-Pull-Stecker, bei dem die Rastzungen 19 durch Zug am Steckergehäuse 18 geöffnet werden können. Das Funktionsprinzip dieser Verriegelung ist in einer älteren Anmeldung der Anmelderin beschrieben.

Sobald der Stecker 1 in eine Steckerbuchse eingesteckt wird, trifft die Stirnseite 15 des Steckerstifts 4 auf die Stirnseite eines benachbarten Steckerstifts und der Steckerstift 4 wird gegen die Kraft der Druckfeder 9 etwas nach hinten gepresst. Dabei heben ersichtlicherweise die beiden Auflaufflanken 7, 7' von den Auflaufkanten an der Gabel 5 ab. Dabei dreht sich der Steckerstift 4 jedoch nicht mehr. Am Ende des zurückgelegten Federweges in Pfeilrichtung e hat der Steckerstift genau die gleiche Drehlage wie am Anfang, in der vorpositionierten Stellung. Dieser Umstand erlaubt eine hohe Reproduzierbarkeit der angestrebten Dämpfungswerte.

## Patentansprüche

1. Stecker (1) für einen Lichtwellenleiter (2) mit einem Steckerkörper (3), in dem ein zylindrischer Steckerstift (4) axial federnd gehalten ist, wobei der Federweg (d) durch ein Sicherungselement (5) begrenzt ist, das in eine Aussparung (6) im Steckerstift eingreift, die zusammen mit dem Sicherungselement einen Anschlag für den Steckerstift bildet, dadurch gekennzeichnet, dass der Anschlag eine Auflaufflanke (7) aufweist, welche schräg zu einer durch die Mittelachse des Steckerstifts verlaufenden Ebene geneigt ist und dass die Auflaufflanke zum bestimmen der Drehlage des Steckerstifts unter der Einwirkung einer Druckfeder (9) gegen eine Auflaufkante (10) pressbar ist, welche im rechten Winkel zur Mittelachse des Steckerstifts und etwa parallel zur Auflaufflanke verläuft.

2. Stecker nach Anspruch 1, dadurch gekennzeichnet, dass die Auflaufflanke am Sicherungselement angeordnet ist und dass die Auflaufkante durch den Steckerstift gebildet wird.

3. Stecker nach Anspruch 1, dadurch gekennzeichnet, dass die Auflaufflanke (7) am Steckerstift (4) angeordnet ist und dass die Auflaufkante durch das Sicherungselement (5) gebildet wird.

4. Stecker nach Anspruch 2 oder 3, dadurch gekennzeichnet, dass der Steckerstift (4) zwei einander diametral gegenüberliegende, segmentförmige Aussparungen (6, 6') mit parallelen Grundflächen (11, 11') aufweist.

5. Stecker nach Anspruch 4, dadurch gekennzeichnet, dass das Sicherungselement eine U-förmige Gabel (5) ist, die mit Spiel in die Aussparungen eingreift.

6. Stecker nach einem der Ansprüche 1 bis 5, dadurch gekennzeichnet, dass die Auflaufflanke unter einem Winkel von mehr als 20° und weniger als 70°, vorzugsweise von etwa 45° geneigt ist.

7. Stecker nach einem der Ansprüche 1 bis 6, dadurch gekennzeichnet, dass der Steckerstift (4) in axialer Richtung in einer Zentrierhülse (12) geführt ist, die Bestandteil des Steckerkörpers (3) ist.

8. Stecker nach Anspruch 7, dadurch gekennzeichnet, dass an der Zentrierhülse eine Positioniernase (13) zum Bestimmen der Drehlage des Steckerkörpers relativ zu einer Buchse angeordnet ist.

9. Stecker nach einem der Ansprüche 1 bis 8, dadurch gekennzeichnet, dass die Stirnseite (15) des Steckerstifts (4) bzw. des darin gehaltenen Lichtwellenleiters (2) zum Erzeugen einer erhöhten Rückflussdämpfung angeschrägt oder abgerundet ist.
